# EUROPEAN PATENT SPECIFICATION

(11) **EP 2 499 057 B1**
(45) Date of publication and mention of the grant of the patent: **04.05.2016**
(21) Application number: 10776578.6
(22) Date of filing: 30.10.2010
(51) Int. Cl.: B65D 25/52, B65D 47/26, B65D 83/04, B65D 83/06, G01F 11/26

(54) **Dispensing cap, container and method for dispensing contents**
Spenderdeckel, Behälter und Verfahren zum Spenden von Inhalt
Bouchon distributeur, récipient et procédé de distribution de contenu

(30) Priority: 09.11.2009 EP 09290854
(43) Date of publication of application: 19.09.2012
(73) Proprietor: Bayer Intellectual Property GmbH, 40789 Monheim am Rhein (DE)
(72) Inventor: MOREAU, Fabrice, F-69160 Tassin La Demi Lune (FR)
(74) Representative: Wagner Albiger & Partner Patentanwälte mbB
(86) International application number: PCT/EP2010/006635
(87) International publication number: WO 2011/054484

(56) References cited:
- WO-A1-94/10541
- DE-U1- 29 811 680
- US-A- 4 346 823

## Description

The invention relates to a cap for a container with a mouth such as a bottle, in accordance with the preamble of claim 1, comprising a lower part for attachment to the mouth of the container, comprising an upper part provided on the lower part and comprising a partition within the cap to divide the cap into a first section and into at least one further section, wherein the upper part has a dispensing orifice.

Furthermore, the invention relates to a method, in accordance with claim 9, for dispensing contents of a container with a cap according to claim 1, whereby the contents can be dosed by turning the container in such a manner, that the contents can follow a sinuous path through the cap by redirecting of two radially spaced barriers of the closure.

Caps for containers where the cap can be manipulated between a closed position (where the contents of the container cannot be dispensed) and an open position (where the contents of the container can be poured out or scattered) are of course well known. For example, caps for containers for sugar strands or similar sweet toppings usually have a pouring or scattering aperture, which can be opened and closed by means of a hinged flap attached to the cap. Such caps may alternatively be formed with a part connected to the container, and a rotatable part, both of which have apertures. The parts can be rotated relative to one another to bring the apertures into and out of alignment, allowing the contents to be sprinkled out of the container when the apertures are aligned, and preventing this when the apertures are not aligned.

Container closures are also known which allow the contents of the container to be dispensed in dosed quantities. For example, cartons of washing powder can be provided with such closures, which allow a metered dose of washing powder to be dispensed each time from the container.

The US 4346823 A discloses a multiple function closure for attachment to a container for divided material, including a first cap having an end wall, a measuring unit attached to one side of the end wall and a second cap attached to the other side of the end wall. The first cap can be attached to the container so that the end wall closes the opening in the container. The second cap is rotatably mounted on the first cap and can selectively be placed in a closed position, a measured dispensing position and a non-measured dispensing position.

The WO 1994/10542 A1 discloses a volumetric device for liquefacient substances. The device has an open ended box-section structured body the ends providing an inlet and an outlet thereto these being controlled by valves. At least one wall is of semi-rigid nature and is disposed to deflect outwardly. An adjustment element is attached to the outer side thereof. Appropriately rotating the adjustment element enables the wall to be impinged inwardly and thus the volume of the device altered. Two of the devices are arranged side by side to form a fill-head, the devices being controlled by common valves. US 434 6823 discloses a cap in accordance with the preamble of claim 1. However, there are some products for which it would be desirable to be able to dispense them in both of the ways mentioned above (poured and in metered doses).

It is an object of at least the preferred embodiments of the invention to provide a cap for a container which allows the contents of the container to be dispensed both ways.

Furthermore, the object of the invention is solved by a cap for a container with a mouth such as a bottle, comprising an lower part for attachment to the mouth of the container, comprising an upper part provided on the lower part and comprising a partition within the cap to divide the cap into a first section and into at least one further section, wherein the upper part has a dispensing orifice, whereby the partition comprising a first blade and at least a further blade, whereby the blades are arranged moveable to each other to provide either a straight passage or a sinuous passage through the cap.

Also disclosed is a cap for a container with a mouth such as a bottle, comprising a lower part for attachment to the mouth of the container, and an upper part provided on and rotatable relative to the lower part, wherein the upper part has a dispensing orifice and the lower and upper parts can be rotated into: a first position, where there is no passage through the cap and the contents of the container cannot be dispensed from the dispensing orifice; a second position, where there is a straight passage through the cap and the contents of the container can be dispensed from the dispensing orifice by pouring or scattering; and a third position, where there is a sinuous passage through the cap, and the contents of the container can be dispensed from the dispensing orifice in a preset dosed quantity.

Thus, the contents of the container can be dispensed in two different ways (by pouring and scattering and in dosed quantities), and the container can also be closed when not in use. As the cap is moved between the first, second and third positions by relative rotation of the parts of the cap, there is no risk of a part of the cap becoming lost, as would be possible if a part of the cap had to be removed altogether to allow dispensing.

Preferably, the cap is placed at a neck of the container.

Such a cap can be handled very simple. Different functions, for example poured and metered doses, can be obtained without any problems.

Advantageously, the first blade of the partition is rotatably displaceable in relation to the further blade of the partition to provide either a straight passage or a sinuous passage through the cap. The first element is an upper blade of the cap and the further element is a lower blade of the cap.

The cap can be designed in a particularly simple manner, when the first element of the partition can be rotated around the main axis of the cap.

Advantageously, the blades of the partition are radially spaced apart from the main axis of the cap. The inside of the cap can be formed asymmetrically in a simple manner. So either a straight passage or a sinuous passage through the cap can easily be provided.

As a further advantage, the first blade of the partition comprises the upper part and the further blade of the partition comprises the lower part. Thus the cap can have a very compact design.

It would be possible to provide the dispensing orifice on any part of the cap. However, in a preferred form, the lower part and the upper part are generally rotationally symmetric around the main axis of the cap and/or of the mouth of the container, the upper part rotates around this axis, and the dispensing orifice of the upper part is provided in a planar portion generally perpendicular the axis. The cap can then be moved between its various positions by rotating the upper part of the cap, which is a natural and familiar action.

Any suitable means can be provided to allow the upper part of the cap to rotate on the lower part of the cap. Preferably, the lower part of the cap is provided with a cylindrical wall defining a passage therethrough, which cylindrical wall is surrounded by a skirt of the upper part of the cap, which skirt is attached to the planar portion. As the cylindrical wall serves to locate the upper part of the cap on the lower part, and also serves as a passage to guide the contents of the container during dispensing, the structure of the cap can be simplified.

In a preferred form, wherein an upper horizontal wall of the lower part extends across a part of the top of the cylindrical wall of the lower part, this upper horizontal wall serving to close the dispensing orifice when the lower and upper parts are in their first position. The upper horizontal wall can be formed integrally and simultaneously with the cylindrical wall (for example by injection moulding), which simplifies manufacture.

In order to dispense contents of the container through the sinuous passage, it is necessary for a user to move the container in a certain way, so that the contents move through the sinuous passage under gravity. In a particularly preferred form, the sinuous passage includes three vertical passages, arranged so as to be generally "N"-shaped, so that the container must be inverted three times to allow contents of the container to be dispensed through the sinuous passage.

Preferably, a lower blade extends across the passage defined by the cylindrical wall, and a lower horizontal wall extends across a part of the bottom of the cylindrical wall and is connected to the lower blade, the lower blade and the lower horizontal wall serving to partially define said sinuous passage. Again, these walls can be formed integrally and simultaneously with the cylindrical wall by injection moulding, to further simplify manufacture.

The upper part of the cap is formed with a upper blade, extending downwardly from the planar portion, and in a preferred from, a gap is formed between the top of a part of the upper blade and the underside of the planar portion, this gap serving to accommodate the upper horizontal wall when the lower part and the upper part are moved out of their first position.

The upper blade serves to partially define the sinuous passage, and the provision of the gap allows the lower and upper parts of the cap to be rotated relative to each other, to allow the cap to put into a position where the sinuous passage is formed.

Preferably, rotation of the upper part by a quarter-turn relative to the lower part moves the cap from its first position to its second position, and rotation of the upper part by a further quarter-turn relative to the lower part moves the cap from its second position to its third position.

According to another aspect of the invention the object of the invention is solved by a method for dispensing contents of a container with a cap, whereby the contents can be dosed by turning the container in such a manner, that the contents can follow a sinuous path through the closure by redirecting of two radially spaced blades of the cap whereby the cap can be closed by rotating at least one of the blades in a first position, whereby the first of the blades is axially aligned with the second of the blades or the cap can be opened with a straight passage by rotating, at least one of the blades in another position, whereby the first of the blades is arranged in an intersecting way to the second of the blades axially like a cross.

Advantageously, with this method it is possible to use a cap, especially of a bottle, in a multifunctional manner, like it is described exemplary in regard to the following preferred embodiment.

A preferred application of the invention relates to a closure for granules, pellets or of that kind, not for liquids.

A preferred embodiment of the invention will now be described by way of example only and with reference to the accompanying drawings, in which:
- Figure 1: is a side view of an upper part of a cap of a closure of a bottle;
- Figure 2: is a side view of an lower part of the cap;
- Figure 3: is a top view of the upper part shown in Fig. 1 of the cap;
- Figure 4: is a top view of the lower part shown in Fig. 2 of the cap;
- Figure 5: is a cross-sectional view along the cutting line A-A shown in Fig. 3;
- Figure 6: is a cross-sectional view along the cutting line B-B shown in Fig. 4;
- Figure 7: is a perspective cross-sectional view of the cap in its second (pouring) position; and
- Figure 8: is a perspective cross-sectional view of the cap in its third (dosed quantity) position.

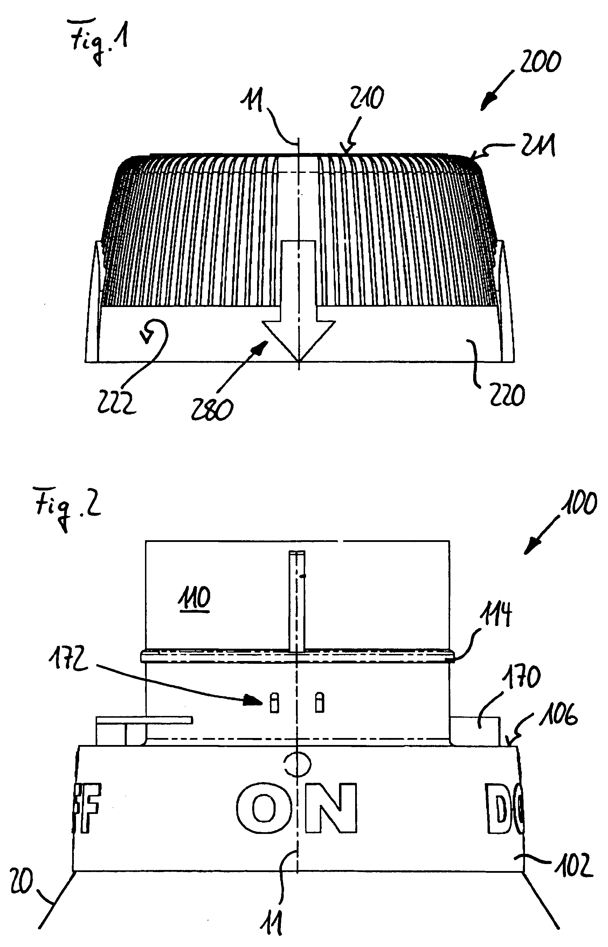

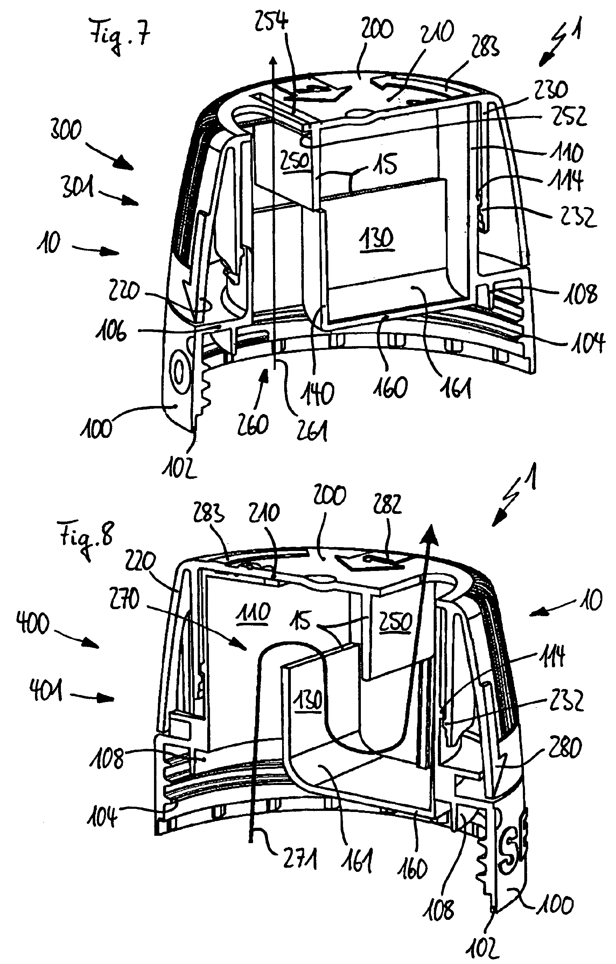

In this exemplary embodiment the closure 1, especially shown in Figures 7 and 8, is a cap 10 consisting of two parts: a lower part 100 (especially Fig. 2, 4 and 6), which is screwed or otherwise secured to the neck of a bottle 20 or similar container 20, and an upper part 200 (especially Fig. 1, 3 and 5), which is secured to the lower part 100, and can be rotated relative to the lower part 100. The contents of the bottle 20 are a fluent powder or granular material. In a particularly preferred form the contents are slug pellets.

When the lower and upper parts 100, 200 are in a first position (not shown), the cap 10 is closed, and the contents of the bottle 20 cannot be dispensed.

When the lower and upper parts 100, 200 are in a second position 300, there is a straight passage 260 through the cap 10, which allows the contents of the bottle 20 to be dispensed by pouring or scattering (see Fig. 7).

When the lower and upper parts 100, 200 are in a third position 400, there is a sinuous passage 270 through the cap 10, which allows the contents of the bottle 20 to be dispensed in a preset dosed quantity (see Fig 8).

The lower and upper parts 100, 200 of the cap 10 will now be described, and the words "vertical", "horizontal" and so on will be used in the context of the bottle 20 being upright, with the cap 10 at the top.

The lower part 100 is formed with a skirt 102 connected to the radially outer edge of a generally planar annular section 106. The skirt 102 has a thread 104 formed on its radially lower side, for engagement with the threaded neck of a bottle 20. A further skirt 108 is also formed starting from the planar annular section 106, to seal against the inside of the neck of the bottle 20.

A cylindrical wall 110 projects upwards from the radially lower edge of the generally planar annular section 106, and this cylindrical wall 110 forms a passage 112 through which the contents of the bottle 20 can be dispensed. Further walls are formed within and across the cylindrical wall 110, and these further walls serve to define the various passages 260 (Fig. 7) and 270 (Fig. 8) through the cap 10, respectively.

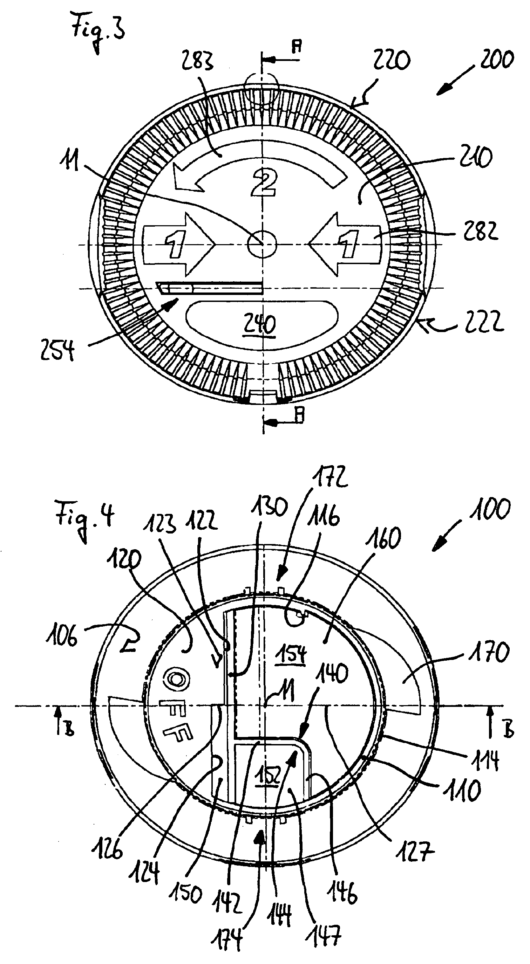

An upper horizontal wall 120 extends partway across the top of the cylindrical wall 110. As can be seen especially in figure 4, the shape of the upper horizontal wall 120 corresponds generally to a segment of the circle defined by the cylindrical wall 110, but the edge of the upper horizontal wall 120 corresponding to the chord is stepped, so that it is formed from two parallel chords 122, 124. The step 126 is perpendicular to the parallel chords 122, 124, and in the present case is arranged along the diameter 127 of the cylindrical wall 110 which is perpendicular to the parallel chords 122, 124.

A lower blade 130, shaped by a first vertical wall of the lower part 100, extends across the cylindrical wall 110, and is positioned vertically beneath and vertically spaced from the edge of the upper horizontal wall 120. The thickness of the lower blade 130 is the same as the length of the step 126 in the edge of the upper horizontal wall 120, and the lower blade 130 is positioned such that its sides are vertically aligned with the two parallel chords 122, 124 defining the upper horizontal wall 120.

A further vertical wall 140 is formed with a portion 142 that extends generally perpendicularly from the lower blade 130 to a curved region 144, and a portion 146 that extends from the curved region 144 to the cylindrical wall 110. The lower blade 130 and the portion 146 of the further vertical wall 140 which extends from the curved region 144 to the cylindrical wall 110 are parallel to each other, and equidistant from the diameter 127 of the cylindrical wall 110 to which they are parallel. The further vertical wall 140, the lower blade 130 and the cylindrical wall 110 form a pouring tunnel 147.

Thus, the lower blade 130 and the vertical wall 140 divide the passage 112 defined by the cylindrical wall 110 into three sections: a first section 150 which is segment-shaped and is defined by the cylindrical wall 110 and the lower blade 130; and second and third sections 152, 154 which are defined by the cylindrical wall 110, the lower blade 130, and the further vertical wall 140.

The first and second sections 150, 152 are open, so that material (and in particular the contents of the container 20) can pass through them. However, the third section 154 is closed off by a lower horizontal wall 160. As best shown in Figures 7 and 8, the lower horizontal wall 160 is positioned slightly below the generally planar annular section 106, and the cylindrical wall 110, the lower blade 130 and the further vertical wall 140 all extend slightly below the generally planar annular section 106 to connect with the lower horizontal wall 160. Further, again best shown in Figures 7 and 8, the area where the lower horizontal wall 160 joins the lower blade 130 is radiused, to avoid a sharp (right-angled) join 161 between the wall 160 and the lower blade 130.

The lower part 100 is also formed with a ratchet 170 and projections 172, 174 (see especially Fig. 4) at the area where the cylindrical wall 110 meets the generally annular planar portion 106. This ratchet 170 and these projections 172, 174 interact respectively, with projections 224, 226, 228 on the upper part 200 of the cap 10, to hold it in the various positions.

The ratchet 170 and the projection 224 which hold the lower and upper parts 100, 200 in the first (closed) position are formed such that the upper part 200 must be deformed to disengage the ratchet 170 and the projection 224, thus providing a child-resistant feature.

The projections 172, 226 and 174, 228 which hold the lower and upper parts 100, 200 in the second and third (open) positions 300, 400 are formed such that they can be disengaged simply by rotating the lower and upper parts 100, 200 relative to each other.

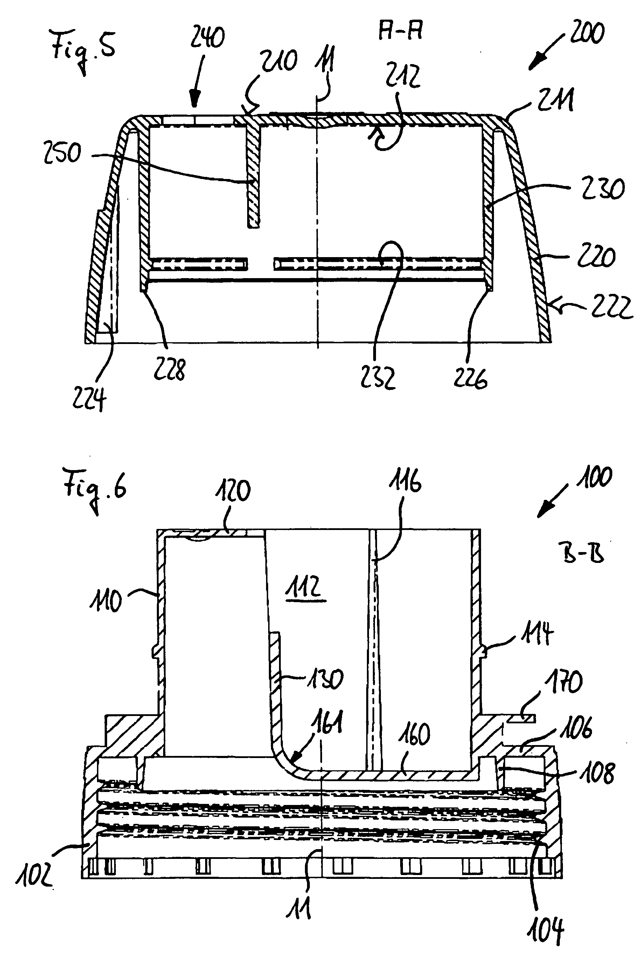

The upper part 200 of the cap 10 is generally formed from a circular planar portion 210 with two skirts 220, 230 (see Fig. 5) which depend from the edge 211 of the circular planar portion 210.

The outer skirt 220 is formed with a frusto-conical shape and is shaped such that, when the lower and upper parts 100, 200 of the cap 10 are assembled, it is continuous with the skirt 102 of the lower part 100 of the cap 10, to improve the appearance of the cap 10. It is also formed with the projections 224, 226, 228 which, in co-operation with the ratchet 170 and the projections 172, 174 on the lower part 100 of the cap 10, provide the child-resistant feature.

The inner skirt 230 is generally cylindrical, and is sized to fit snugly around the cylindrical wall 110 of the lower part 100 of the cap 10. As best seen in Figures 5 and 7, the inner skirt 230 and the cylindrical wall 110 are formed with interacting projections 232, 114, which prevent the lower and upper parts 100, 200 of the cap 10 from coming apart but allow relative rotation.

An orifice 240 is formed in the circular planar portion 210. This orifice 240 is generally segment-shaped, and is of a size such that when the lower and upper parts 100, 200 of the cap 10 are in their closed position, the orifice 240 overlies the upper horizontal wall 120 of the lower part 100 of the cap 10 and is completely closed off thereby.

An upper blade 250, shaped by a depending wall, extends downwardly from the lower surface 212 of the circular planar portion 210. The upper blade 250 extends across almost the entire width of the inner skirt 230, but is separated from the inner skirt 230 at both ends, to allow the inner skirt 230 to surround the cylindrical wall 110 of the lower part 100 of the cap 10. There is a negligible gap between the ends of the upper blade 250 and the inside of the cylindrical wall 110.

The upper blade 250 is positioned such that, when the lower and upper parts 100, 200 of the cap 10 are in their closed position, the upper blade 250 is directly above the lower blade 130 of the lower part 100 of the cap 10, and the upper blade 250 and the lower blade 130 have approximately the same thickness.

In this exemplary embodiment the upper blade 250 and the lower blade 130 can shape the partition 15 together, when the upper blade 250 is axially aligned with the lower blade 130 (not shown).

The upper blade 250 is an element of the partition 15 and the lower blade 130 is a further element of the partition 15.

Further, there is a gap 252 (Fig. 7) between a part of the upper blade 250 and the circular planar portion 210, and this gap 252 accommodates the upper horizontal wall 120 of the lower part 100 of the cap 10 when the lower and upper parts 100, 200 are rotated relative to each other out of their closed position.

The upper part 200 of the cap 10 is preferably formed by injection moulding. In order to allow the gap 252 between the upper blade 250 and the circular planar portion 210 to be formed without using cores, a further orifice 254 is formed in the circular planar portion 210 directly above the upper blade 250. This further orifice 254 is in the form of a narrow slit, whose width is approximately equal to the thickness of the upper blade 250.

When the lower and upper parts 100, 200 of the cap 10 are in their closed position, the second orifice 254 overlies the wider part 123 (see Fig. 4) of the stepped edge 122, 124, 126 of the upper horizontal wall 120 of the lower part 100 of the cap 10, and thus is also closed off by the upper horizontal wall 120.

The various positions of the lower and upper parts 100, 200 will now be described.

As mentioned above, when the lower and upper parts 100, 200 are in their first position, namely a closed position (not shown), both the orifices 240, 254 in the circular planar portion 210 of the upper part 200 are closed off by the upper horizontal wall 120 of the lower part 100. Thus, the contents of the bottle 20 to which the cap 10 is attached cannot be dispensed, as there is no path through the cap 10.

In this first position the upper blade 250 and the lower blade 130 shapes two barriers of the partition 15, whereby the both barriers are axial aligned arranged.

In order to put the cap 10 into its second position 300, namely a first open position 301 (see Fig. 7), the upper part 200 is rotated by 90 degrees anticlockwise (when viewed from above) relative to the lower part 100.

As a result of this rotation, the orifice 240 is positioned so that it is arranged positioned vertically above a part of the first section 150 of the passage 112 through the cylindrical wall 110 and above the second section 152 of the passage 112. There is thus a straight passage 260 through the cap 10 (consisting of the orifice 240 and the first and second passages 150, 152), through which the contents of the bottle 20 can be poured or scattered. This straight passage 260 is indicated by straight arrow 261. A small part of the orifice 240 is still closed off by the upper horizontal wall 120, but this does not greatly impede the dispensing of the contents of the bottle 20 when it is tipped.

The flow of contents through the first section 150 of the passage 112 into the orifice 240 is controlled to some degree by the upper blade 250.

In the first open position 301, the upper blade 250 is arranged perpendicular to the lower blade 130 (although it will be appreciated that the blade 130 is no longer vertical when the bottle 20 is tipped to dispense its contents), and serves to divide the first section 150 of the passage 112, preventing material above the wall from easily flowing out through the orifice 240.

In this second position 300, namely the first open position 301, the two barriers are arranged in an axially intersecting way (shown in Fig.7).

In order to put the cap 10 into its third position 400, namely a second open position 401 (see Fig. 8), the upper part 200 is rotated by a further 90 degrees anticlockwise (when viewed from above) relative to the lower part 100.

In this second open position 401, the upper blade 250 is arranged parallel to but spaced from the lower blade 130. Further, the walls of the lower and upper parts 100, 200 of the cap 10 are positioned such that, in this second open position 400, the upper blade 250 overlies the portion 146 of the further vertical wall 140 which extends from the curved region 144 to the cylindrical wall 110, and this prevents direct communication between the second section 152 of the passage 112 through the cylindrical wall 110 and the orifice 240.

In this third position 400 the barriers are radially spaced arranged (shown in Fig. 8).

As shown in Figures 4 and 6, there is an inward projection 116 on the cylindrical wall 110, and this serves as a stop 116 to limit motion of the upper blade 250 and ensure that it is correctly positioned. This stop 116 may be used in addition to or as an alternative to the engaging projections 174, 228 on the lower and upper parts 100, 200 of the cap 10 to locate the parts in the second open position 400.

The only way in which the contents of the bottle 20 can be dispensed through the orifice 240 when the cap 10 is in the second open position 400 is by following a sinuous path 270, through the first section 150 of the passage 112, over the top of the lower blade 130, down between the lower blade 130 and the upper blade 250, under the upper blade 250, up through the third section 154 of the passage 112 and out through the orifice 240. This passage is indicated by sinuous arrow 271.

Of course, in order for the contents of the bottle 20 to follow this path, it is necessary - if using the cap 10 for the first time on the third position 400 - for the bottle 20 to be inverted three times, to allow the contents to flow under gravity.

The first inversion leads to the cap 10 being below the bottle 20, and the contents flow downwards through the first and second sections 150, 152 of the passage 112 and accumulate on the region of the circular planar portion 210 (and on the upper horizontal wall 120) bounded by the cylindrical wall 110 and the upper blade 250.

After the second inversion, the cap 10 is again above the bottle 20. The contents which had previously accumulated on the circular planar portion 210 and the upper horizontal wall 120 fall downwards, and some of the contents fall back through the first and second sections 150, 152 of the passage 112 into the bottle 20. However, some fall through the gap between the lower blade 130 and the upper blade 250, and accumulate on the lower horizontal wall 160. The radiused join between the lower blade 130 and the lower horizontal wall 160 will tend to urge falling contents away from the lower blade 130, so that they accumulate beneath the orifice 240.

After the third inversion, the cap 10 is again below the bottle 20, and the contents which had accumulated on the lower horizontal wall 160 fall downwards. Again, some will fall back through the gap between the lower blade 130 and the upper blade 250, but most will fall through the orifice 240 and thus out of the cap 10. Thus, it is possible to dispense a small amount of the contents of the bottle 20.

Furthermore, it will be appreciated that after the third inversion, some of the contents of the bottle 20 will have accumulated on the region of the circular planar portion 210 bounded by the cylindrical wall 110 and the upper blade 250, as they did after the first inversion. Thus, two more inversions of the bottle 20 will allow a further small amount of the contents to be dispensed. This process can be repeated as many times as desired, to dispense a desired quantity of the contents of the bottle 20 in small amounts.

It will also be appreciated that the amount of contents dispensed is roughly the same each time, as the amount is determined by the dimensions of the various walls defining the sinuous passage 270. Thus, it is possible to design the parts of the cap 10 so that a desired dose of contents is dispensed each time. Of course, this desired dose may vary depending on the product to be dispensed, and so caps with walls of differing dimensions can be provided for use with different products.

In other words to get a dose you need:
a) First time on third position (total = three times):
   - put the bottle 20 upside down
   - put the bottle 20 upright
   - put the bottle 20 upside down again
b) After this first time (total = two times):
   - put the bottle upright
   - put the bottle upside down

As shown in the drawings, an arrow 280 can be formed on the frusto-conical outer surface 222 of the outer skirt 220 of the upper part 200 of the cap 10, for example by moulding, and this arrow 280 can be moved to point at different indicia on the skirt 102 of the lower part 100 of the cap 10 (shown as "OFF" for the closed position, "ON" for the first open position, and "DOSE" for the second open position). In addition, arrows 282 and 283 indicating the motions necessary to rotate the upper part 200 on the lower part 100 can also be formed on the cap 10, as best seen in Figure 3.

The lower and upper parts 100, 200 of the cap 10 are formed separately, preferably by injection moulding as mentioned above. The parts 100, 200 are then assembled together by pressing the upper part 200 onto the lower part 100 until the interacting projections 232, 114 engage together, to retain the upper part 200 on the lower part 100. The assembled cap 10 can then be screwed on to the bottle 20.

The cap 10, especially the lower and upper parts 100, 200 of the cap 10, and the opening of the bottle 20 have an identical main axis 11.

### List of Reference Numerals:

- 1: closure
- 10: cap
- 11: main axis
- 15: partition
- 20: container (bottle)
- 100: lower part
- 102: skirt
- 104: thread
- 106: planar annular section
- 108: further skirt
- 110: cylindrical wall
- 112: passage
- 114: interacting projection
- 116: inward project/stop
- 120: upper horizontal wall
- 122: first parallel chord/stepped edge
- 124: first parallel chord/stepped edge
- 126: stepped edge
- 127: diameter
- 130: lower blade
- 140: further vertical wall
- 142: portion
- 144: curved region
- 146: portion
- 147: pouring tunnel
- 150: first section
- 152: second section
- 154: third section
- 160: lower horizontal wall
- 161: sharp join
- 170: ratchet
- 172: projection
- 174: projection
- 200: upper part
- 210: circular planar portion
- 211: edge
- 212: lower surface
- 220: outer skirt of the upper part
- 222: outer surface
- 224: projection
- 226: projection
- 228: projection
- 230: inner skirt of the upper part
- 232: interacting projection
- 240: dispensing orifice
- 250: upper blade
- 252: gap
- 254: further orifice
- 260: straight passage
- 261: straight arrow
- 270: sinuous passage
- 271: sinuous arrow
- 280: arrow
- 282: arrow
- 283: arrow
- 300: second position
- 301: first open position
- 400: third position
- 401: second open position

## Claims

1. A cap (10) for a container (20) with a mouth such as a bottle, comprising a lower part (100) for attachment to the mouth of the container (20), an upper part (200) provided on the lower part (100) and a partition (15) within the cap (10) to divide the cap (10) into a first section (150) and into at least one further section (152, 154), wherein the upper part (200) has a dispensing orifice (240), **characterised in that** the partition (15) comprises an upper blade (250) on the upper part (200) and at least a lower blade (130) on the lower part (100), whereby the blades (130,250) are arranged to be rotatably displaceable relative to each other, by rotation, about the main axis (11) of the cap (10), of the upper part (200) relative to the lower part (100) to provide either a straight passage (260,261) or a sinuous passage (270, 271), through the cap, to the dispensing orifice.

2. A cap (10) as claimed in claim 1, wherein the lower part (100) and the upper part (200) are generally rotationally symmetric about the main axis (11) of the cap (10) and/or of the opening of the container (20), the upper part (200) rotating around this axis (11), and the dispensing orifice (240) of the upper part (200) being provided in a planar portion (210) generally perpendicular to the axis (11).

3. A cap (10) as claimed in claim 1 or claim 2, wherein the lower part (100) of the cap (10) is provided with a cylindrical wall (110) defining a passage (112) therethrough, which cylindrical wall (110) is surrounded by a skirt (230) of the upper part (200) of the cap (10), which skirt (230) is attached to a planar portion (210) of the upper part (200).

4. A cap (10) as claimed in claim 1 to claim 3, wherein an upper horizontal wall (120) of the lower part (100) extends across a part of the top of a cylindrical wall (110) of the lower part (100), this upper horizontal wall (120) serving to close the dispensing orifice (240) when the lower and upper parts (100, 200) are in a first position, wherein in the first position there is no passage through the cap (10) and the contents of the container (20) cannot be dispensed from the dispensing orifice (240).

5. A cap (10) as claimed in claim 3 or claim 4, wherein the lower blade (130) extends across the passage (112) defined by the cylindrical wall (110), and a lower horizontal wall (160) extends across a part of the bottom of the cylindrical wall (110) and is connected to the lower blade (130), the lower blade (130) and the lower horizontal wall (160) serving to partially define said sinuous passage (270, 271).

6. A cap (10) as claimed in claim 5, wherein the upper part (200) of the cap (10) is formed with the first element (250), extending downwardly from the planar portion (210), and a gap (252) is formed between the top of a part of the upper blade (250) and the underside (212) of the planar portion (210), this gap (252) serving to accommodate the upper horizontal wall (120) when the lower part (100) and the upper part (200) are moved out of their first position.

7. A cap (10) as claimed in any preceding claim, wherein rotation of the upper part (200) by a quarter-turn relative to the lower part (100) moves the cap (10) from its first position to its second position (300), and rotation of the upper part (200) by a further quarter-turn relative to the lower part (100) moves the cap (10) from its second position (300) to its third position (400), wherein in the first position there is no passage through the cap (10) and the contents of the container (20) cannot be dispensed from the dispensing orifice, wherein in the second position (300) there is the straight passage (260, 261) through the cap (10) and the contents of the container (20) can be dispensed from the dispensing orifice by pouring or scattering, wherein in the third position (400) there is the sinuous passage (270, 271) through the cap (10), and the contents of the container (10) can be dispensed from the dispensing orifice (240) in a preset dosed quantity.

8. Method for dispensing contents of a container (20) with a cap (1) according to claim 1, whereby the contents can be dosed by turning the container (20) upside down, turning the container (20) upright, and turning the container (20) upside down again and, after this first dosing by turning the container (20) upright and upside down, so that the contents can follow a sinuous path (270, 271) through the cap (1) to the dispensing orifice, by redirecting by two blades (130, 250) being spaced apart in a radial direction with respect to the main axis (11) of the cap (1), and whereby the closure (1) can be closed by rotational displacement of at least one of the blades (130, 250) to a first position, in which the first (250) of the blades (130, 250) is axially aligned with the second (130) of the blades (130, 250), and whereby the closure (1) can be opened with a straight passage (260, 261) through the cap to the dispensing orifice by rotational displacement of at least one of the blades (130, 250) to a further position (300), in which the first (250) of the blades (130, 250) is arranged perpendicular to the second blade (130).

## Patentansprüche

1. Deckel (10) für einen Behälter (20) mit einer Mündung, wie z. B. eine Flasche, umfassend einen unteren Teil (100) zur Befestigung an der Mündung des Behälters (20), einen oberen Teil (200), der auf dem unteren Teil (100) bereitgestellt ist und eine Trennwand (15) innerhalb des Deckels (10) zum Aufteilen des Deckels (10) in einen ersten Abschnitt (150) und mindestens einen weiteren Abschnitt (152, 154) aufweist, wobei der obere Teil (200) eine Spenderöffnung (240) aufweist, **dadurch gekennzeichnet, dass** die Trennwand (15) eine obere Schaufel (250) an dem oberen Teil (200) und mindestens eine untere Schaufel (130) am unteren Teil (100) aufweist, wobei die Schaufeln (130, 250) angeordnet sind, um drehbar in Bezug aufeinander durch Drehen um eine Hauptachse (11) des Deckels (10) des oberen Teils (200) in Bezug auf den unteren Teil (100) verschiebbar zu sein, um entweder einen geraden Durchgang (260, 261) oder einen gewundenen Durchgang (270, 271) durch den Deckel zu der Spenderöffnung bereitzustellen.

2. Deckel (10) nach Anspruch 1, wobei der untere Teil (100) und der obere Teil (200) im Allgemeinen drehsymmetrisch um die Hauptachse (11) des Deckels (10) und/oder um die Öffnung des Behälters (20) sind, wobei der obere Teil (200) um diese Achse (11) dreht und die Spenderöffnung (240) des oberen Teils (200) in einem flachen Abschnitt (210) bereitgestellt ist, der im Allgemeinen senkrecht zur Achse (11) verläuft.

3. Deckel (10) nach Anspruch 1 oder Anspruch 2, wobei der untere Teil (100) des Deckels (10) mit einer zylindrischen Wand (110) bereitgestellt ist, die einen Durchgang (112) dadurch definiert, wobei die zylindrische Wand (110) von einer Einfassung (230) des oberen Teils (200) des Deckels (10) umgeben ist, wobei die Einfassung (230) an einem flachen Abschnitt (210) des oberen Teils (200) befestigt ist.

4. Deckel (10) nach Anspruch 1 bis 3, wobei sich eine obere horizontale Wand (120) des unteren Teils (100) über einen Teil der Oberseite einer zylindrischen Wand (110) des unteren Teils (100) erstreckt, wobei diese obere horizontale Wand (120) dazu dient, die Spenderöffnung (240) zu schließen, wenn sich der untere und der obere Teil (100, 200) in einer ersten Position befinden, wobei in der ersten Position kein Durchgang durch den Deckel (10) vorliegt und der Inhalt des Behälters (20) nicht aus der Spenderöffnung (240) ausgegeben werden kann.

5. Deckel (10) nach Anspruch 3 oder Anspruch 4, wobei sich die untere Schaufel (130) über den Durchgang (112) erstreckt, der von der zylindrischen Wand (110) definiert wird, und wobei sich eine untere horizontale Wand (160) über einen Teil der Unterseite der zylindrischen Wand (110) erstreckt und mit der unteren Schaufel (130) verbunden ist, wobei die untere Schaufel (130) und die untere horizontale Wand (160) zum teilweise Definieren des gewundenen Durchgangs (270, 271) dienen.

6. Deckel (10) nach Anspruch 5, wobei der obere Teil (200) des Deckels (10) mit dem ersten Element (250) ausgebildet ist, das sich nach unten von dem flachen Abschnitt (210) erstreckt, und ein Spalt (252) zwischen der Oberseite eines Teils der oberen Schaufel (250) und der Unterseite (212) des flachen Abschnitts (210) ausgebildet ist, wobei dieser Spalt (252) zum Aufnehmen der oberen horizontalen Wand (120) dient, wenn der untere Teil (100) und der obere Teil (200) aus der ersten Position bewegt werden.

7. Deckel (10) nach einem der vorhergehenden Ansprüche, wobei eine Viertel-Drehung des oberen Teils (200) in Bezug auf den unteren Teil (100) den Deckel (10) aus seiner ersten Position zu seiner zweiten Position (300) bewegt und die weitere Viertel-Drehung des oberen Teils (200) in Bezug auf den unteren Teil (100) den Deckel (10) von seiner zweiten Position (300) zu seiner dritten Position (400) bewegt, wobei in der ersten Position kein Durchgang durch den Deckel (10) vorliegt und der Inhalt des Behälters (20) nicht aus der Spenderöffnung ausgegeben werden kann, wobei in der zweiten Position (300) der gerade Durchgang (260, 261) durch den Deckel (10) vorliegt und der Inhalt des Behälters (20) aus der Spenderöffnung durch Gießen oder Schütten ausgegeben werden kann, wobei in der dritten Position (400) der gewundene Durchgang (270, 271) durch den Deckel (10) vorliegt und der Inhalt des Behälters (10) von der Spenderöffnung (240) in einer voreingestellten dosierten Menge ausgegeben werden kann.

8. Verfahren zum Spenden von Inhalt aus einem Behälter (20) mit einem Deckel (1) nach Anspruch 1, bei dem die Inhalte durch Umdrehen des Behälters (20), durch Drehen des Behälters (20) in die aufrechte Position und erneutes Umdrehen des Behälters (20) nach dem ersten Schließen durch Aufrechtdrehen des Behälters (20) und Umdrehen davon dosiert werden kann, sodass der Inhalt einem gewundenen Weg (270, 271) durch den Deckel (1) zur Spenderöffnung folgen kann, indem die zwei Schaufeln (130, 250) in radialer Richtung in Bezug auf die Hauptachse (11) des Deckels (1) beabstandet sind, wodurch der Verschluss (1) durch Drehverschiebung mindestens einer der Schaufeln (130, 250) zu einer ersten Position geschlossen werden kann, in der die erste (250) der Schaufeln (130, 250) axial mit der zweiten (130) der Schaufeln (130, 250) ausgerichtet ist, wodurch der Verschluss (1) mit einem geraden Durchgang (260, 261) durch den Deckel zur Spenderöffnung durch Drehverschiebung mindestens einer der Schaufeln (130, 250) zu einer weiteren Position (300) geöffnet werden kann, wobei die erste (250) der Schaufeln (130, 250) senkrecht zu der zweiten Schaufel (130) angeordnet ist.

## Revendications

1. Bouchon (10) pour un récipient (20) comportant un goulot, tel qu'une bouteille, comprenant une partie inférieure (100) à fixer au goulot du récipient (20), une partie supérieure (200) prévue sur la partie inférieure (100) et une cloison (15) à l'intérieur du bouchon (10) afin de diviser le bouchon (10) en une première section (150) et au moins une section supplémentaire (152, 154), dans lequel la partie supérieure (200) comprend un orifice de distribution (240), **caractérisé en ce que** la cloison (15) comprend une lame supérieure (250) sur la partie supérieure (200) et au moins une lame inférieure (130) sur la partie inférieure (100), dans lequel les lames (130, 250) sont agencées de manière à pouvoir être déplacées de façon rotative l'une par rapport à l'autre par une rotation, autour de l'axe principal (11) du bouchon (10), de la partie supérieure (200) par rapport à la partie inférieure (100) afin de former un passage droit (260, 261) ou un passage sinueux (270, 271) à travers le bouchon jusqu'à l'orifice de distribution.

2. Bouchon (10) selon la revendication 1, dans lequel la partie inférieure (100) et la partie supérieure (200) sont essentiellement rotatives de façon symétrique autour de l'axe principal (11) du bouchon (10) et/ou de l'ouverture du récipient (20), la partie supérieure (200) tournant autour de cet axe (11), et l'orifice de distribution (240) de la partie supérieure (200) étant prévu dans une partie plane (210) essentiellement perpendiculaire à l'axe (11).

3. Bouchon (10) selon la revendication 1 ou la revendication 2, dans lequel la partie inférieure (100) du bouchon (10) est pourvue d'une paroi cylindrique (110) qui définit un passage (112) à travers celle-ci, ladite paroi cylindrique (110) étant entourée par une jupe (230) de la partie supérieure (200) du bouchon (10), ladite jupe (230) étant attachée à une partie plane (210) de la partie supérieure (200).

4. Bouchon (10) selon l'une quelconque des revendications 1 à 3, dans lequel une paroi horizontale supérieure (120) de la partie inférieure (100) s'étend en travers d'une partie du sommet d'une paroi cylindrique (110) de la partie inférieure (100), cette paroi horizontale supérieure (120) servant à fermer l'orifice de distribution (240) lorsque les parties inférieure et supérieure (100, 200) se trouvent dans une première position, première position dans laquelle il n'y a pas de passage à travers le bouchon (10) et où le contenu du récipient (20) ne peut pas être distribué à partir de l'orifice de distribution (240).

5. Bouchon (10) selon la revendication 3 ou la revendication 4, dans lequel la lame inférieure (130) s'étend en travers du passage (112) défini par la paroi cylindrique (110), et une paroi horizontale inférieure (160) s'étend en travers d'une partie du fond de la paroi cylindrique (110) et est connectée à la lame inférieure (130), la lame inférieure (130) et la paroi horizontale inférieure (160) servant à définir partiellement ledit passage sinueux (270, 271).

6. Bouchon (10) selon la revendication 5, dans lequel la partie supérieure (200) du bouchon (10) est formée avec le premier élément (250), qui s'étend vers le bas à partir de la partie plane (210), et un espace (252) est formé entre le sommet d'une partie de la lame supérieure (250) et le côté inférieur (212) de la partie plane (210), cet espace (252) servant à recevoir la paroi horizontale supérieure (120) lorsque la partie inférieure (100) et la partie supérieure (200) sont déplacées hors de leur première position.

7. Bouchon (10) selon l'une quelconque des revendications précédentes, dans lequel une rotation de la partie supérieure (200) d'un quart de tour par rapport à la partie inférieure (100) déplace le bouchon (10) de sa première position vers sa deuxième position (300), et une rotation de la partie supérieure (200) d'un quart de tour supplémentaire par rapport à la partie inférieure (100) déplace le bouchon (10) de sa deuxième position (300) vers sa troisième position (400), dans lequel, dans la première position, il n'y a pas de passage à travers le bouchon (10) et le contenu du récipient (20) ne peut pas être distribué à partir de l'orifice de distribution, dans lequel, dans la deuxième position (300), le passage droit (260, 261) est formé à travers le bouchon (10) et le contenu du récipient (20) peut être distribué à partir de l'orifice de distribution par versage ou projection, dans lequel, dans la troisième position (400), le passage sinueux (270, 271) est formé à travers le bouchon (10), et le contenu du récipient (10) peut être distribué à partir de l'orifice de distribution (240) en une quantité dosée prédéfinie.

8. Procédé de distribution du contenu d'un récipient (20) comprenant un bouchon (1) selon la revendication 1, dans lequel le contenu peut être dosé en retournant le récipient (20), en redressant le récipient (20) et en retournant à nouveau le récipient (20) et, après ce premier dosage en redressant et en retournant le récipient (20) de telle sorte que le contenu puisse suivre un chemin sinueux (270, 271) à travers le bouchon (1) jusqu'à l'orifice de distribution, en redirigeant à l'aide de deux lames (130, 250) espacées l'une de l'autre dans une direction radiale par rapport à l'axe principal (11) du bouchon (1), et dans lequel la fermeture (1) peut être fermé par un déplacement rotatif d'au moins une des lames (130, 250) vers une première position, dans laquelle la première (250) des lames (130, 250) est alignée axialement avec la deuxième (130) des lames (130, 250), et dans lequel la fermeture (1) peut être ouvert avec un passage droit (260, 261) à travers le bouchon jusqu'à l'orifice de distribution par un déplacement rotatif d'au moins une des lames (130, 250) jusqu'à une position supplémentaire (300) dans laquelle la première (250) des lames (130, 250) est agencée perpendiculairement à la deuxième lame (130).
